# EUROPEAN PATENT APPLICATION

(11) **EP 4 181 492 A1**
(43) Date of publication of application: **17.05.2023**
(21) Application number: 22205340.7
(22) Date of filing: 03.11.2022
(51) Int. Cl.: H04M 1/04, G06F 1/16, H04M 1/72409, H02J 7/00, H01R 13/516

(54) **CONNECTOR CAPABLE OF ADJUSTING POSITION OF CONNECTION TERMINAL**

(30) Priority: 15.11.2021 KR 20210156348
(71) Applicant: Kum Oh Electronics CO., LTD., Bucheon-si, Gyeonggi-do 420-859 (KR)
(72) Inventor: KIM, Ki Sang, 420-859 Bucheon-si (KR)
(74) Representative: Noréns Patentbyrå AB

(57) **Abstract**

Provided is a connector capable of adjusting a position of a connection terminal, the connector including: a body (10) including a body part (13) and the connection terminal (15) connected to a connection port of a mobile device; and a casing (20) including a horizontal surface (22) supporting a connection surface of the mobile device, and a vertical surface (24) supporting a rear surface of the mobile device, wherein the connector further includes an elevation bolt (60) provided at the casing (20) and configured to adjust a protruding length of the connection terminal (15) from the horizontal surface (22) by raising or lowering the body part (13).

## Description

### CROSS REFERENCE TO RELATED APPLICATION

The present application claims priority to Korean Patent Application No. 10-2021-0156348, filed November 15, 2021, the entire contents of which is incorporated herein for all purposes by this reference.

### BACKGROUND OF THE INVENTION

### Field of the Invention

The present disclosure relates to a connector that is connected to a mobile device to supply power or support data communication. More particularly, the present disclosure relates to a connector capable of adjusting a position of a connection terminal, wherein the position of the connection terminal connected to a mobile device, specifically, a protruding length of the connection terminal from a horizontal surface and an interval between the connection terminal and a vertical surface, is adjusted so that the connection terminal is stably connected to a connection port of the mobile device regardless of the type of the mobile device and a type of a protective case protecting the mobile device.

### Description of the Related Art

Due to the development of IT technology, various mobile devices, such as a smartphone, a laptop computer, a navigation device, a digital camera, etc., are on the market.

A charging cable or a USB cable is used for charging a mobile device or for data communication with another mobile device.

The charging cable or the USB cable is provided with a connector that is connected to a connection port of a mobile device to enable charging or data communication.

The applicant of the present disclosure developed Korean Patent No. 10-2139930 "CONNECTOR FOR DISPLAYED MOBILE" as a connector for charging a mobile device or for data communication.

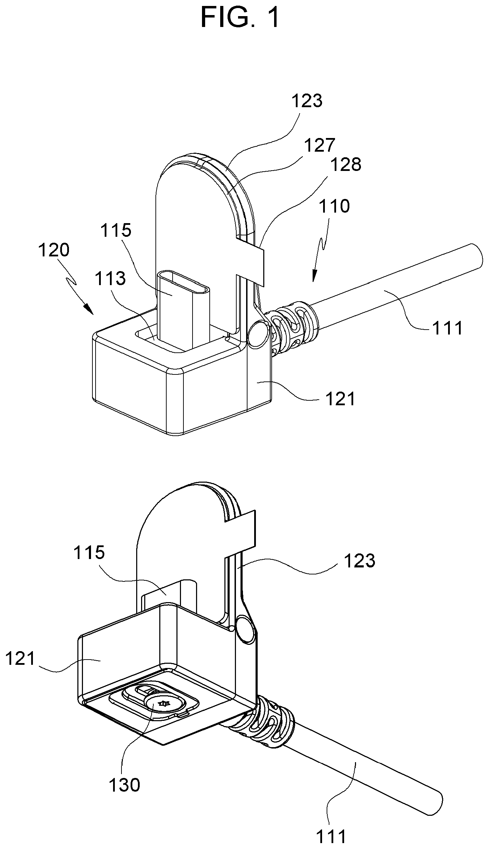

Korean Patent No. 10-2139930 "CONNECTOR FOR DISPLAYED MOBILE" relates to a connector for a mobile device displayed in a store so that customers can try the mobile device. As shown in FIG. 1, the connector includes: a connection terminal 115 connected to a connection port of a mobile device; a casing 120 on which a support plate 123 supporting a rear surface of the mobile device is vertically formed; and a fixing block 130 fixing, within the casing 120, an insertion block 113 provided with the connection terminal 115.

According Korean Patent No. 10-2139930 "CONNECTOR FOR DISPLAYED MOBILE", in order to stably support a mobile device displayed in a store, the support plate 123 supporting the rear surface of the mobile device is provided, and the connection terminal 115 is connected to the connection port of the mobile device even when the distance between the connection port and the rear surface varies depending on the type of the mobile device. In this case, an interval between the connection terminal 115 and the support plate 123 is adjustable by moving the insertion block 113 within the casing 120 so that the support plate 123 can support the rear surface of the mobile device.

A mobile device is an expensive electronic product, and is generally wrapped in a protective case to be protected from external impact.

The rear surface of the mobile device is stably supported by the support plate 127 only when the interval between the connection terminal 115 and the support plate 127 is adjusted depending on whether a protective case is present or not and the thickness of the protective case.

In addition, only when the protruding length of the connection terminal 115 from the upper surface of a body 121 of the casing 120 is adjusted, a connection surface (the surface on which the connection port is formed) of the mobile device is stably supported on the upper surface of the body 121.

However, Korean Patent No. 10-2139930 "CONNECTOR FOR DISPLAYED MOBILE" cannot adjust the protruding length of the connection terminal 115, so the connection surface of the mobile device is not stably supported on the upper surface of the body 121 depending on whether a protective case is present or not or the thickness of the protective case.

The foregoing is intended merely to aid in the understanding of the background of the present disclosure, and is not intended to mean that the present disclosure falls within the purview of the related art that is already known to those skilled in the art.

### SUMMARY OF THE INVENTION

Accordingly, the present disclosure has been made keeping in mind the above problems occurring in the related art, and the present disclosure is directed to providing a connector capable of adjusting a position of a connection terminal, wherein the position of the connection terminal is adjustable up, down, left, and right so that the connection terminal is stably connected to a connection port of a mobile device and the mobile device is stably supported on a casing regardless of the type of the mobile device or the presence of a protective case and protective cases varying in thickness.

According to the present disclosure, there is provided a connector capable of adjusting a position of a connection terminal, the connector including: a body (10) including a body part (13) and the connection terminal (15) that is provided protruding from an upper surface of the body part (13) and is connected to a connection port of a mobile device; and a casing (20) in which a receiving space (211) in which the body part (13) is received and an exposure hole (212) connected with the receiving space (211) and through which the connection terminal (15) protrudes and is exposed are provided, the casing (20) including a horizontal surface (22) supporting a connection surface of the mobile device, and a vertical surface (24) provided vertically at an end of the horizontal surface (22) and supporting a rear surface of the mobile device, wherein the connector further includes an elevation bolt (60) provided at the casing (20) and configured to adjust a protruding length of the connection terminal (15) from the horizontal surface (22) by raising or lowering the body part (13).

In addition, the connector may further include a holder (30) holding the body part (13), received in the receiving space (211) of the casing (20), and coupled with the elevation bolt (60) by screw-type engagement to be raised or lowered within the receiving space (211).

In addition, the connector may further include a cover (40) coupled to a lower portion of the casing (20) to cover an opening (214).

According to the present disclosure, the connector capable of adjusting the position of the connection terminal adjusts the position of the connection terminal according to a type of a mobile device, the presence of a protective case, and the thickness of the protective case, so that the connection terminal can be stably connected to a connection terminal of the mobile device, the mobile device can be stably supported by the casing, and the position of the connection terminal can be easily adjusted. The configuration of the connector for these effects is simple and easy, so the connector is an inexpensive and highly productive product and is a very useful invention for industrial development.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 shows perspective views of a connector in the related art;
FIGS. 2A and 2B show perspective views of a connector capable of adjusting a position of a connection terminal according to the present disclosure;
FIGS. 3A and 3B show exploded perspective views of FIGS. 2A and 2B; and

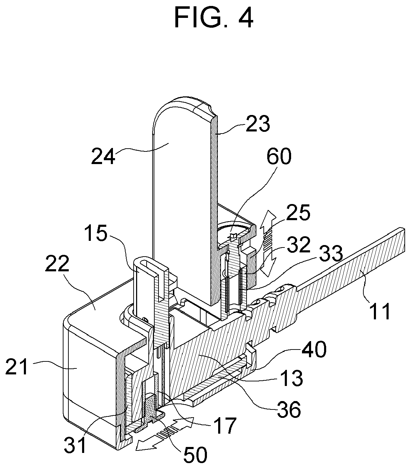

FIG. 4 is a cross-sectional perspective view of FIG. 2A.

### DETAILED DESCRIPTION OF THE INVENTION

Hereinbelow, an exemplary embodiment of the present disclosure will be described in detail with reference to the accompanying drawings. Throughout the drawings, the same reference numerals will refer to the same or like parts.

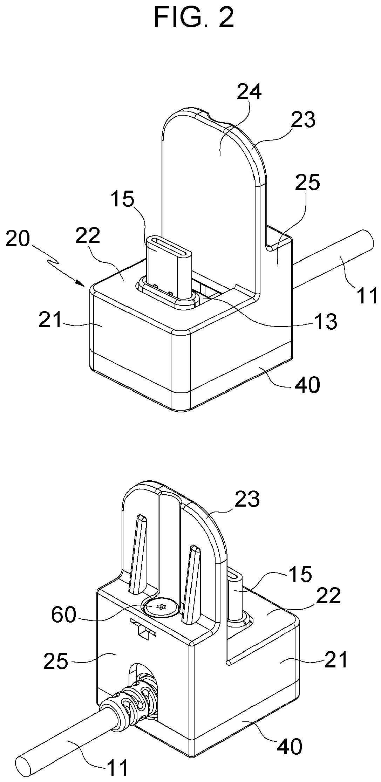

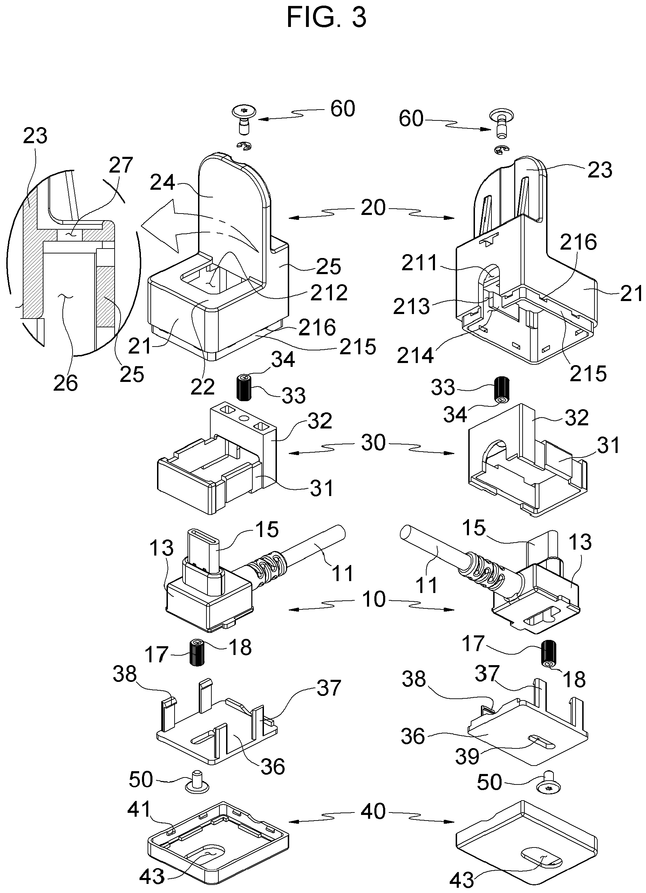

As shown in FIGS. 2A, 2B, 3A, and 3B, according to the present disclosure, a connector capable of adjusting a position of a connection terminal includes a body 10, a casing 20, a holder 30, a cover 40, a fixing bolt 50, and an elevation bolt 60.

The body 10 includes a body part 13 and the connection terminal 15. To the body part 13, an electric wire 11 is connected to receive power from the outside or for data communication. The connection terminal 15 is provided protruding from the upper surface of the body part 13, and is connected to a connection port of a mobile device.

In the lower surface of the body part 13, a screw hole into which the fixing bolt 50 is coupled by screw-type engagement is formed. The screw hole may be formed by etching the body part 13, and may be formed by inserting an insert nut 17. The insert nut 17 is formed of a metal material and has a screw hole 18 in the insert nut 17. The insert nut 17 is preferable for long-term use because a thread inside the screw hole 18 is not easily worn despite repeated tightening and loosening of the fixing bolt 50.

The casing 20 receives the body part 13 therein, and supports a connection surface and the rear surface of the mobile device.

The casing 20 includes a casing body 21 and a support plate 23.

Inside the casing body 21, a receiving space 211 in which the body part 13 is received is formed. In the upper portion of the casing body 21, an exposure hole 212 through which the connection terminal 15 is exposed is formed. In the rear portion of the casing body 21, a passing hole 213 through which the electric wire passes is formed. In the lower portion of the casing body 21, an opening 214 is formed enabling the body part 13 to be inserted and received in the receiving space 211 during assembly.

Herein, the upper surface of the casing body 21 is a horizontal surface 22 supporting the connection surface at which the connection port of the mobile device is provided, and the front surface of the support plate 23 is a vertical surface 24 supporting the rear surface of the mobile device.

At the rear portion of the casing body 21, formed is an elevation wall 25 that defines a guide hole 26 for giving guidance about raising or lowering the holder 30 is formed. In the upper portion of the elevation wall 25, a through hole 27 through which the elevation bolt 60 passes is formed.

At the outer surface of the lower portion of the casing body 21, formed is a stepped part 215 that is stepped so that the cover 40 and the stepped part 215 interlock having matched sides. In the stepped part 2215, formed are hook hollows 216 into which hook protrusions 41 of the cover 40 are coupled by hook-type engagement.

The holder 30 holds the body part 13 of the body 10, and is capable of being raised or lowered in an upward-downward direction in the receiving space 211 of the casing 20.

The holder 30 includes a receiving box 31 and a lid 36. In the receiving box 31, the body part 13 is received in a forward-backward movable manner. The lid 36 covers an opening in the lower portion of the receiving box 31.

At the rear portion of the receiving box 31, formed is a guide part 32 that is raised or lowered along the guide hole 26 of the casing 20.

In the guide part 32, a screw hole into which the elevation bolt 60 is coupled by screw-type engagement is formed. The screw hole may be formed by etching the guide part 32, and may be formed by inserting an insert nut 33 into the guide part 32. The insert nut 33 is formed of a metal material and has a screw hole 34 in the insert nut 33. The insert nut 33 is preferable for long-term use because a thread inside the screw hole 34 is not easily worn despite repeated tightening and loosening of the elevation bolt 60.

At the edges of the lid 36, elastic pieces 37 are formed. The elastic pieces 37 protrude upward and have ends provided with respective stopping protrusions 38 stopped on and coupled to the top of the receiving box 31. In the bottom of the lid 36, a long hole 39 is formed enabling the fixing bolt 50 to be movable in a forward-backward direction.

The cover 40 is interlocked with the stepped part 215 formed at the lower portion of the casing 20, and covers the opening in the lower portion of the casing 20.

In the bottom of the cover 40, a receiving hole 43 in which the head of the fixing bolt 50 is received is formed long in a forward-backward direction. At the upper portions of the inner sides of the cover 40, formed are the hook protrusions 41 coupled into the hook hollows 216 of the casing body of the casing 20 by hook-type engagement.

The fixing bolt 50 is coupled into, by screw-type engagement, the screw hole 18 of the insert nut 17 inserted into the body part 13 of the body 10, so as to fix the body part 13 to the lid 36 of the holder 30 by tightening the fixing bolt 50.

While the fixing bolt 50 is unscrewed, the fixing bolt 50 is moved along the long hole 39 of the lid 36 so as to adjust the interval between the connection terminal 15 of the body 10 and the support plate 23 of the casing 20.

Accordingly, regardless of a type of a mobile device, the presence of a protective case, and protective cases varying in thickness, the connection terminal 15 is connected to the connection port of the mobile device and the rear surface of the mobile device is touched and supported by the front surface of the support plate 23, specifically, the vertical surface 24 of the support plate 23.

The elevation bolt 60 passes through the passing hole 213 of the casing 20 and rotates idly, and is coupled into, by screw-type engagement, the screw hole 34 of the insert nut 33 inserted into the guide part 32 of the receiving box 31 of the holder 30. Thus, as the elevation bolt 60 is rotated forward or reversely, the receiving box 31 is raised or lowered.

As the receiving box 31 of the holder 30 is raised or lowered through the elevation bolt 60, the body part 13 of the body 10 held in the receiving box 31 is raised or lowered together, thereby adjusting the protruding length of the connection terminal 15 of the body 10 from the upper surface of the casing 20, specifically, the horizontal surface 22 of the casing body 21.

Accordingly, regardless of a type of a mobile device, the presence of a protective case, and protective cases varying in thickness, the connection terminal 15 is connected to the connection port of the mobile device and the connection surface of the mobile device is touched and supported by the horizontal surface 22 of the casing body 21.

Although in describing the present disclosure, a connector that has a particular shape and structure and is capable of adjusting a position of a connection terminal has been described with reference to the accompanying drawings, various modifications and changes of the present disclosure may be made by those skilled in the art and such modifications and changes should be construed as belonging to the scope of the present disclosure.

## Claims

1. A connector capable of adjusting a position of a connection terminal, the connector comprising:
a body (10) comprising a body part (13) and the connection terminal (15) that is provided protruding from an upper surface of the body part (13) and is connected to a connection port of a mobile device; and
a casing (20) in which a receiving space (211) in which the body part (13) is received and an exposure hole (212) connected with the receiving space (211) and through which the connection terminal (15) protrudes and is exposed are provided, the casing (20) comprising a horizontal surface (22) supporting a connection surface of the mobile device, and a vertical surface (24) provided vertically at an end of the horizontal surface (22) and supporting a rear surface of the mobile device,
wherein the connector further comprises an elevation bolt (60) provided at the casing (20) and configured to adjust a protruding length of the connection terminal (15) from the horizontal surface (22) by raising or lowering the body part (13) .

2. The connector of claim 1, further comprising a holder (30) holding the body part (13), received in the receiving space (211) of the casing (20), and coupled with the elevation bolt (60) by screw-type engagement to be raised or lowered within the receiving space (211).

3. The connector of claim 1, further comprising a cover (40) coupled to a lower portion of the casing (20) to cover an opening (214).
